# EUROPÄISCHE PATENTSCHRIFT

(11) **EP 1 590 389 B1**
(45) Veröffentlichungstag und Bekanntmachung des Hinweises auf die Patenterteilung: **05.12.2007**
(21) Anmeldenummer: 04717102.0
(22) Anmeldetag: 04.03.2004
(51) Int. Cl.: C08G 18/10, C08J 9/14, C08L 75/04

(54) **ISOCYANATFREIE SCHÄUMBARE MISCHUNGEN**
EXPANDABLE MIXTURES THAT ARE DEVOID OF ISOCYANATES
MELANGES EXPANSIBLES EXEMPTS D'ISOCYANATES

(30) Priorität: 17.03.2003 DE 10311723
(43) Veröffentlichungstag der Anmeldung: 02.11.2005
(73) Patentinhaber: Wacker Chemie AG, 81737 München (DE)
(72) Erfinder: STANJEK, Volker, 81477 München (DE); WEIDNER, Richard, 84489 Burghausen (DE)
(74) Vertreter: Fritz, Helmut
(86) Internationale Anmeldenummer: PCT/EP2004/002214
(87) Internationale Veröffentlichungsnummer: WO 2004/083271

(56) Entgegenhaltungen:
- EP-A- 0 931 800
- WO-A-96/06124
- WO-A-02/066532

## Beschreibung

Die Erfindung betrifft isocyanatfreie schäumbare Mischungen enthalten Prepolymere und ein Kohlenwasserstoff-Treibmittel.

Spraybare Montageschäume dienen zum Ausfüllen von Hohlräumen vor allem im Baubereich. Hier werden sie u.a. zum Abdichten von Fügen, z.B. bei Fenstern und Türen eingesetzt, wobei sie als ausgezeichnet isolierende Materialien zu einer guten Wärmedämmung führen. Weitere Anwendungen sind beispielsweise die Isolierung von Rohrleitungen oder das Ausschäumen von Hohlräumen in technischen Geräten.

Bei sämtlichen herkömmlichen Montageschäumen handelt es sich um sogenannte Polyurethanschäume (PU-Schäume), die im unvernetzten Zustand aus Prepolymeren bestehen, die über eine hohe Konzentration an freien Isocyanatgruppen verfügen. Diese Isocyanatgruppen sind in der Lage, mit geeigneten Reaktionspartnern bereits bei Raumtemperatur Additionsreaktionen einzugehen, wodurch eine Aushärtung des Sprayschaumes nach dem Auftrag erreicht wird. Die Schaumstruktur wird dabei durch das Einmengen eines leichtflüchtigen Treibmittels in das noch unvernetzte Rohmaterial und/oder durch Kohlendioxid erzeugt, wobei letzteres durch eine Reaktion von Isocyanaten mit Wasser gebildet wird. Das Ausbringen des Schaumes geschieht in der Regel aus Druckdosen durch den Eigendruck des Treibmittels.

Als Reaktionspartner für die Isocyanate dienen Alkohole mit zwei oder mehr OH-Gruppen - vor allem verzweigte und unverzweigte Polyole - oder aber Wasser. Letzteres reagiert mit Isocyanaten unter der bereits erwähnten Freisetzung von Kohlendioxid zu primären Aminen, die sich dann direkt an eine weitere, noch unverbrauchte Isocyanatgruppe addieren können. Es entstehen Urethan- bzw. Harnstoffeinheiten, die auf Grund ihrer hohen Polarität und ihrer Fähigkeit zur Ausbildung von Wasserstoffbrückenbindungen im ausgehärteten Material teilkristalline Substrukturen ausbilden können und so zu Schäumen mit hoher Härte, Druck- und Reißfestigkeit führen.

Als Treibmittel werden meist Gase verwendet, die bereits bei relativ geringem Druck kondensierbar sind und somit der Prepolymermischung in flüssigem Zustand beigemischt werden können, ohne daß die Spraydosen übermäßig hohen Drücken ausgesetzt werden müssen. Des weiteren enthalten die Prepolymerabmischungen weitere Additive wie z.B. Schaumstabilisatoren, Emulgatoren, Flammschutzmittel, Weichmacher und Katalysatoren. Bei den letzteren handelt es sich meist um organische Zinn(IV)-Verbindungen oder tertiäre Amine. Geeignet sind hier aber beispielsweise auch Eisen(III)-Komplexe.

PU-Sprayschäume werden sowohl als sogenannte einkomponentige (1K-) als auch als zweikomponentige (2K-) Schäume hergestellt. Die 1K-Schäume härten dabei ausschließlich durch den Kontakt der isocyanathaltigen Prepolymermischung mit der Luftfeuchtigkeit aus. Durch das bei den 1K-Schäumen während der Härtungsreaktion freigesetzte Kohlendioxid kann zudem die Schaumbildung unterstützt werden. 2K-Schäume enthalten eine Isocyanat- und eine Polyol-Komponente, die direkt vor dem Verschäumen gut miteinander vermischt werden müssen und durch die Reaktion des Polyols mit den Isocyanaten aushärten. Vorteil der 2K-Systeme ist eine extrem kurze Aushärtdauer von z.T. nur wenigen Minuten bis zu einer vollständigen Härtung. Sie besitzen jedoch den Nachteil, daß sie eine kompliziertere Druckdose mit zwei Kammern benötigen und zudem in der Handhabung deutlich weniger komfortabel sind als die 1K-Systeme.

Die ausgehärteten PU-Schäume zeichnen sich vor allem durch ihre ausgezeichneten mechanischen und wärmedämmenden Eigenschaften aus. Des weiteren besitzen sie eine sehr gute Haftung auf den meisten Untergründen und sind unter trockenen und UVgeschützten Bedingungen von nahezu beliebiger Beständigkeit. Weitere Vorteile liegen in der toxikologischen Unbedenklichkeit der ausgehärteten Schäume ab dem Zeitpunkt, an dem sämtliche Isocyanateinheiten quantitativ abreagiert sind, sowie in ihrer zügigen Aushärtung und ihrer leichten Handhabbarkeit. Auf Grund dieser Eigenschaften haben sich PU-Schäume in der Praxis sehr bewährt.

Allerdings besitzen die PU-Sprayschäume den kritischen Nachteil, daß die Isocyanatgruppen auf Grund ihrer hohen Reaktivität auch ausgesprochen reizende und toxische Wirkungen entfalten können. Auch stehen die Amine, die sich durch eine Reaktion von monomeren Diisocyanaten mit einem Überschuß an Wasser bilden können, in vielen Fällen im Verdacht, krebserregend zu sein. Derartige monomere Diisocyanate sind in den meisten Sprayschaumabmischungen neben den isocyanatterminierten Prepolymeren ebenfalls enthalten. Daher sind die unvernetzten Sprayschaummassen bis zur vollständigen Aushärtung toxikologisch nicht unbedenklich. Kritisch ist hier neben dem direkten Kontakt der Prepolymermischung mit der Haut vor allem auch eine mögliche Aerosolbildung während des Aufbringen des Schaumes oder das Verdampfen von niedermolekularen Bestandteilen, z.B. von monomeren Isocyanaten. Dadurch besteht die Gefahr, daß toxikologisch bedenkliche Verbindungen über die Atemluft aufgenommen werden. Zudem besitzen Isocyanate ein erhebliches allergenes Potential und können u.a. Asthmaanfälle auslösen. Verschärft werden diese Risiken noch durch die Tatsache, daß die PU-Sprayschäume oftmals nicht von geschulten und geübten Anwendern sondern von Bastlern und Heimwerkern verwendet werden, so daß eine sachgerechte Handhabung nicht immer vorausgesetzt werden kann.

Als Folge des von herkömmlichen PU-Schäumen ausgehenden Gefährdungspotentials und der damit verbundenen Kennzeichnungspflicht hat sich zusätzlich auch noch das Problem einer stark sinkenden Akzeptanz der entsprechenden Produkte beim Anwender ergeben. Zudem gelten ganz oder teilweise entleerte Spraydosen als Sondermüll und müssen entsprechend gekennzeichnet und in einigen Ländern wie z.B. Deutschland sogar mittels eines kostenintensiven Recyclingsystems einer Wiederverwertung zugänglich gemacht werden.

Um diese Nachteile zu überwinden, wurden u.a. in DE-A-43 03 848 bereits Prepolymere für Sprayschäume beschrieben, die keine bzw. nur geringe Konzentrationen an monomeren Isocyanaten enthalten. Nachteilig an solchen Systemen ist jedoch die Tatsache, daß die Prepolymere noch immer über Isocyanatgruppen verfügen, so daß derartige PU-Sprayschäume unter toxikologischen Gesichtspunkten zwar als günstiger als herkömmliche Schäume, nicht aber als unbedenklich zu bezeichnen sind. Auch werden die Akzeptanz- und Abfallprobleme durch derartige Schaumsysteme nicht gelöst.

Es wäre daher wünschenswert, wenn zur Herstellung von Sprayschäumen Prepolymere zur Verfügung stehen würden, die nicht über Isocyanatgruppen vernetzen und somit toxikologisch unbedenklich sind. Allerdings sollten sich auch mit diesen Prepolymermischungen Sprayschäume herstellen lassen, die im ausgehärteten Zustand ähnlich gute Eigenschaften und vor allem eine vergleichbare Härte aufweisen wie herkömmliches isocyanathaltige PU-Schäume. Außerdem müssen auch einkomponentige Sprayschaumsysteme möglich sein, die ausschließlich über den Kontakt mit der Luftfeuchtigkeit aushärten. Dabei sollten sie eine vergleichbar problemlose Handhabbarkeit und Verarbeitbarkeit inklusive einer hohen Härtungsgeschwindigkeit auch bei niedriger Katalysatorkonzentration aufweisen. Letzteres ist vor allem deshalb wichtig, da die in der Regel als Katalysatoren eingesetzten zinnorganischen Verbindungen toxikologisch ebenfalls bedenklich sind. Zudem enthalten Zinnkatalysatoren oftmals auch noch Spuren hochtoxischer Tributylzinnderivate. Von besonderem Vorteil wäre daher ein Prepolymer-System, welches derart günstige Härtungseigenschaften besitzt, daß auf einen Zinnkatalysator ganz verzichtet werden kann.

In der Literatur sind hier z.B. in US-A-6020389 kondensationsvernetzende Siliconschäume beschrieben, die alkoxy-, acyloxy- oder oximoterminierte Siliconprepolymere enthalten. Derartige schäumbare Mischungen sind zwar prinzipiell zur Herstellung von 1K-Schäumen geeignet, die bei Raumtemperatur nur durch die Luftfeuchtigkeit aushärten. Allerdings lassen sich derartige Systeme aus rein siliconhaltigen Prepolymeren nur zur Erzeugung von elastischen weichen bis halbharten Schäumen einsetzen. Zur Herstellung von harten, nicht spröden Montageschäumen sind sie nicht geeignet.

In den WO 00/04069 und WO 02/068419 werden Prepolymerabmischungen mit alkoxysilanterminierten Prepolymeren zur Herstellung von harten Sprayschäumen beschrieben. Dabei handelt es sich um Polymere mit einem organischen Rückgrat, das in der Regel eine herkömmliche Polyurethanstruktur besitzt. Dieses kann durch eine Umsetzung von gängigen Diisocyanaten mit Polyolen gebildet werden. Wird bei diesem ersten Reaktionsschritt ein entsprechender Überschuß an Diisocyanaten eingesetzt, so werden isocyanatterminierte Prepolymere erhalten. Diese können dann in einem zweiten Reaktionsschritt mit Aminopropyltrimethoxysilanderivaten zu den gewünschten alkoxysilanterminierten Polyurethanprepolymeren umgesetzt werden. In WO 02/068491 wird diesem silanterminierten Prepolymeren noch ein spezieller Reaktivverdünner zugegeben. Die Prepolymere sowie die gegebenenfalls vorhandenen Reaktivverdünner können unter Einwirkung eines geeigneten Katalysators in Gegenwart von Wasser unter Methanolabspaltung miteinander kondensieren und dadurch aushärten. Das Wasser kann dabei als solches zugesetzt werden oder auch aus einem Kontakt mit der Luftfeuchtigkeit stammen. Somit lassen sich mit einem solchen System sowohl 1K- als auch 2K-Schäume herstellen.

Die in WO 00/04069 und WO 02/068491 beschriebenen alkoxysilanterminierten Polyurethanprepolymere besitzen jedoch u.a. den Nachteil einer relativ geringen Reaktivität gegenüber der Luftfeuchtigkeit. Deshalb sind hohe Konzentrationen eines Zinnkatalysators zur ausreichend schnellen Aushärtung erforderlich.

Eine deutliche Verbesserung stellt hier ein in WO 02/066532 beschriebenes System dar. Die hier beschriebenen alkoxysilanterminierten Prepolymere zur Herstellung von isocyanatfreien Sprayschäumen enthalten Silanterminierungen der allgemeinen Formel [1], 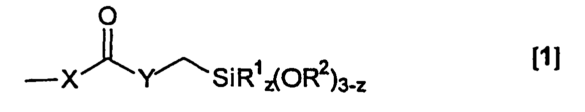 mit:
- **X** und **Y**: ein Sauerstoffatom, eine N-R³-Gruppe oder ein Schwefelatom,
- **R¹**: einen Alkyl-, Cycloalkyl-, Alkenyl- oder Arylrest mit 1-10 Kohlenstoffatomen,
- **R²**: einen Alkylrest mit 1-2 Kohlenstoffatomen oder einen ω-Oxaalkyl-alkylrest mit insgesamt 2-10 Kohlenstoffatomen,
- **R³**: ein Wasserstoffatom, einen Alkyl-, Alkenyl- oder Arylrest mit 1-10 Kohlenstoffatomen oder eine -CH₂-SiR¹_{z}(OR²)_{3-z}-Gruppe und,
- **z**: die Werte 0 oder 1 bedeuten,
mit der Maßgabe, daß mindestens eine der beiden Gruppen **X** oder **Y** eine NH-Funktion darstellt.

Bei diesen alkoxysilylterminierte Prepolymeren sind die vernetzbaren Alkoxysilylgruppen nur durch einen Methylspacer von einer Urethan- oder Harnstoffeinheit getrennt. Diese Prepolymere sind gegenüber Wasser erstaunlich reaktiv und besitzen somit in Gegenwart von Luftfeuchtigkeit extrem kurze Klebfreizeiten und können sogar zinnfrei vernetzt werden.

Ein weiterer entscheidender Nachteil von silanterminierten Prepolymeren für Sprayschaumanwendungen konnte hingegen weder in WO 00/04069 oder WO 02/068491 noch in WO 02/066532 gelöst werden. So sind sämtliche darin konkret beschriebene silanterminierte Prepolymere weitgehend unverträglich mit Treibmittelgemischen, die ausschließlich oder zu großen Teilen aus Kohlenwasserstoffen wie z.B. Propan/Butan-Gemischen bestehen. Zwar können aus den Prepolymeren und diesen Treibmitteln Emulsionen hergestellt werden, die mehrere Stunden stabil sind und sich auch problemlos verschäumen lassen. Allerdings zeigen diese Emulsionen bei Standzeiten von mehreren Tagen oder Wochen eine weitgehende Entmischung. Derartig lange Standzeiten treten jedoch bei der praktischen Verwendung von Sprayschaumdosen regelmäßig auf. Ob der hohen Viskosität der silanterminierten Prepolymere ist eine erneute Emulgierung nach einer Entmischung nur noch durch extrem starkes und langes Schütteln möglich. In der Regel ist das Prepolymer dabei sogar so hochviskos, daß eine Reemulgierung der Prepolymer-Treibmittel-Mischung bei Raumtemperatur überhaupt nicht mehr möglich ist, und die Emulsion vor dem Schütteln zusätzlich noch auf > 40 °C erwärmt werden muß. Ein derartiger Aufwand vor der Verarbeitung von Sprayschäumen wäre jedoch für die Anwender von Sprayschäumen nicht mehr akzeptabel.

Mit anderen Treibmittel zeigen die in WO 00/04069 WO 02/068491 oder WO 02/066532 beschriebenen Prepolymeren zwar eine hinreichende Verträglichkeit, jedoch besitzen diese Treibmittel jeweils andere kritische Nachteile. So zeigt Dimethylether eine erhebliche destabilisierende Wirkung auf den noch nicht ausgehärteten Schaum. Dimethylethergehalte in der Treibmittelmischung von > 20 % sind daher problematisch bzw. in der Regel sogar völlig unmöglich. Fluorhaltige Treibgase hingegen sind ob ihrer Wirkung als Treibhausgase kritisch zu sehen und in einigen Ländern wie z.B. Dänemark für Sprayschaumanwendungen bereits verboten.

Vor allem aber besitzen sämtliche polare Treibmittel, d.h. sämtliche kommerziell preisgünstig verfügbare fluorierte Treibgase sowie Dimethylether, den Nachteil, nach der Verschäumung langsam durch die noch nicht ausgehärteten Schaumlamellen diffundieren zu können. Diese Diffusion eines polaren Treibmittels durch die Schaumlamelle aus ebenfalls polaren Material verläuft dabei wesentlich schneller als die in umgekehrter Richtung verlaufende Diffusion der unpolaren Luft. Dies kann zu einem Schrumpfen des Schaumes und gegebenenfalls sogar zu Rißbildungen führen. Denn anders als bei herkömmlichen PU-Schäumen wird hier während der Härtung kein Kohlendioxid freigesetzt, welches den Treibmittelschwund kompensieren könne. Das Schrumpfen und die damit verbundene Rißbildung machen den Einsatz der entsprechenden Schäume in Fugen mit ungünstiger Geometrie unmöglich.

Aufgabe der vorliegenden Erfindung war es daher, isocyanatfreie Prepolymerabmischungen zu Verfügung zu stellen, die zur Herstellung von Sprayschäumen geeignet sind, welche sich auch mit Kohlenwasserstoffen als Treibmittel verschäumen lassen.

Gegenstand der Erfindung sind isocyanatfreie schäumbare Mischungen enthaltend
(A) eine Mischung aus Prepolymeren (A), deren Kettenenden zu 50-99 % mit Alkoxysilylgruppen und zu 1-50 % mit Gruppen der allgemeinen Formel [2]

   A¹-R¹ [2]

   terminiert sind, in der
   - **A¹**: ein Sauerstoffatom, eine N-R²-Gruppe oder ein Schwefelatom,
   - **R¹**: einen Alkyl-, Cycloalkyl-, Alkenyl-, Aryl- oder Arylalkylrest mit 2-50 Kohlenstoffatomen, wobei die Kohlenstoffkette beliebig durch nicht benachbarte Sauerstoffatome, Schwefelatome oder N-R²-Gruppen unterbrochen sein kann, und die Hauptkette von **R¹** auch noch durch laterale Alkylgruppen mit 1-10 Kohlenstoffatomen oder Halogenatome substituiert sein kann, und
   - **R²**: ein Wasserstoffatom, einen Alkyl-, Alkenyl- oder Arylrest mit 1-10 Kohlenstoffatomen bedeuten, '
   sowie
(B) ein Kohlenwasserstoff-Treibmittel.

Die Verträglichkeit von alkoxysilanterminierten Prepolymeren, wie sie in WO 00/04069 WO 02/068491 oder WO 02/066532 beschrieben sind, mit kohlenwasserstoffhaltigen.Treibmitteln läßt sich drastisch verbessern, wenn ein Teil der Kettenenden dieser Prepolymere mit unpolaren Kohlenwasserstoffketten der allgemeinen Formel [2] terminiert werden. Der Effekt, der bereits durch einen relativ geringen Gehalt dieser Alkylkettenterminierungen erreicht werden kann, ist dabei äußerst bemerkenswert und war - zumindest in dem Umfang - nicht voraussehbar. So können alkoxysilanterminierte Prepolymere, die ohne zusätzliche Alkylterminierungen nahezu vollständig unverträglich mit Treibmitteln aus reinen Kohlenwasserstoffen wie Propan/Butan sind, bereits durch den Einbau von < 10 Gewichtsteilen an Alkylterminierungen so verändert werden, daß sie > 20 Vol.-% an reinem Propan/Butan lösen. Die resultierenden Mischungen lassen sich problemlos verschäumen. Die Härte der resultierenden Schäume wird durch diese Modifikation der Prepolymere erstaunlicherweise nur geringfügig verringert.

Kohlenwasserstoff-Treibmittel (B) zeigen keine bzw. nur eine sehr langsame Diffusion durch das polare Schaummaterial. Auch wirken zeigen sie keine destabilisierende Wirkung auf den nicht ausgehärteten Sprayschaum, zudem sind sie auch ökologisch völlig unbedenklich.

Bei dem Rest **R¹** handelt es sich bevorzugt um eine Alkyl- oder Alkenylgruppen mit 8-26 Kohlenstoffatomen. Besonders bevorzugt handelt es sich um Alkylgruppen mit 10-18 Kohlenstoffatomen. Der Rest R¹ kann dabei verzweigt sein, ist aber bevorzugt unverzweigt. Die einzelnen Reste R¹ können gleich aber auch verschieden sein.

Bei dem Heteroatom **A¹** handelt es sich bevorzugt um ein Sauerstoffatom. Besonders bevorzugt ist dieses Sauerstoffatom Teil einer Urethaneinheit.

Bevorzugt sind isocyanatfreie schäumbare Mischungen, enthaltend Prepolymere (A), die über Alkoxysilylgruppen der allgemeinen Formel [3] 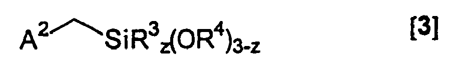 verfügen, in der
- **A²**: ein Sauerstoffatom, eine N-R⁵-Gruppe oder ein Schwefelatom,
- **R³**: einen Alkyl-, Cycloalkyl-, Alkenyl- oder Arylrest mit 1-10 Kohlenstoffatomen,
- **R⁴**: einen Alkylrest mit 1-2 Kohlenstoffatomen oder einen ω-Oxaalkyl-alkylrest mit insgesamt 2-10 Kohlenstoffatomen,
- **R⁵**: ein Wasserstoffatom, einen Alkyl-, Alkenyl- oder Arylrest mit 1-10 Kohlenstoffatomen oder eine -CH₂-SiR³_{z}(OR⁴)_{3-z}-Gruppe und,
- **z**: die Werte 0, 1 oder 2 bedeuten.

Besonders bevorzugt sind dabei Alkoxysilylgruppen der allgemeinen Formel [3], bei denen das Heteroatom **A²** Teil einer Harnstoff oder Urethaneinheit ist.

Als Reste **R³** werden Methyl-, Ethyl- oder Phenylgruppen bevorzugt. Bei den Resten **R⁴** handelt es sich bevorzugt um Methylgruppen und als Reste **R⁵** werden Wasserstoff, Alkylreste mit 1-4 Kohlenstoffatomen, Cyclohexyl- und Phenylreste bevorzugt.

Besonders bevorzugt sind isocyanatfreie schäumbare Mischungen, enthaltend Prepolymere (A), die über Alkoxysilylgruppen der allgemeinen Formel [4] 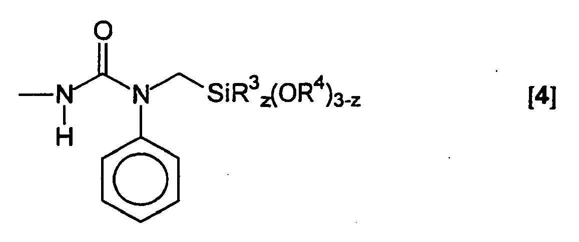 verfügen, wobei **R³, R⁴** und z die bei Formel [3] angegebenen Bedeutungen aufweisen.

Bei den Prepolymeren (A) mit Kettenenden der allgemeinen Formeln [3] oder [4] sind die kondensierbaren Alkoxysilylgruppen nur durch einen Methylspacer von einem Heteroatom getrennt. Wie beschrieben sind derartige Prepolymere gegenüber Wasser erstaunlich reaktiv und besitzen somit in Gegenwart von Luftfeuchtigkeit extrem kurze Klebfreizeiten und können sogar zinnfrei vernetzt werden.

Bevorzugt sind die Kettenenden der Prepolymermischungen (A) zu 65-95 %, insbesondere 80 -95%, mit Alkoxysilylgruppen und zu 5-35 %, insbesondere 5 -20%, mit Gruppen der allgemeinen Formel [2] terminiert.

Das Kohlenwasserstoff-Treibmittel (B) enthält vorzugsweise Kohlenwasserstoffe mit 1-5 Kohlenstoffatomen, besonders bevorzugt 3-5 Kohlenstoffatomen. Insbesondere ist das Kohlenwasserstoff-Treibmittel (B) eine Propan/Butan-Mischung.

Zusätzlich zum Kohlenwasserstoff-Treibmittel (B) können sämtliche für Sprayschaumanwendungen bekannten Treibmittel sowie deren Mischungen eingesetzt werden. Die resultierende Treibmittel-Mischung (BM) aus Kohlenwasserstoff-Treibmittel (B) und einem oder mehreren weiteren Treibmitteln enthält bevorzugt jedoch mindestens 50 Vol.-% Kohlenwasserstoff-Treibmittel (B), insbesondere 80 Vol.-% Kohlenwasserstoff-Treibmittel (B). Als weitere typische Treibmittelkompenente enthält die Treibmittel-Mischung (BM) Dimethylether, bevorzugt 0,1-20 %, besonders bevorzugt 1-10 %. Aber auch sämtliche weiteren bekannten Treibmittel können in der Treibmittel-Mischung (BM) vorhanden sein. Hier können prinzipiell auch sämtliche fluorierten Treibmittel wie 1,1,1,2-Tetrafluoroethan, 1,1-Difluoroethan, 1,1,1,2,3,3,3-Heptafluoropropan verwendet werden.

Besonders bevorzugt sind Treibmittelmischungen (BM), die ausschließlich aus Kohlenwasserstoff-Treibmittel (B) vorzugsweise Propan/Butan-Mischungen - und Dimethylether bestehen. Der Dimethylethergehalt liegt dabei bevorzugt bei 0-20 Vol.-%, besonders bevorzugt bei 1-15 Vol.-%.

Die Hauptketten der Prepolymere (A) können verzweigt oder unverzweigt sein. Die mittleren Kettenlängen können beliebig entsprechend der jeweils gewünschten Eigenschaften, wie Viskosität der unvernetzten Mischung und Härte des fertigen Schaumes, angepaßt werden. Bei den Hauptketten kann es sich um Organopolysiloxane, z.B. Dimethylorganopolysiloxane, um Organosiloxan-Polyurethan-Copolymere oder auch um organische Ketten, z.B. Polyalkane, Polyether, Polyester, Polycarbonate, Polyurethane, Polyharnstoffe, Vinylacetatpolymere oder - copolymere handeln. Selbstverständlich können auch beliebige Mischungen oder Kombinationen aus Prepolymeren mit verschiedenen Hauptketten eingesetzt werden. Dabei hat der Einsatz von Organopolysiloxanen oder Organosiloxan-Polyurethan-Copolymeren, gegebenenfalls in Kombination mit weiteren Prepolymeren mit organischen Hauptketten den Vorteil, daß die resultierenden Schäume über ein günstigeres Brandverhalten verfügen.

Bei einer besonders bevorzugten Ausführungsform der Erfindung besitzen die Prepolymere (A) einen Polyurethankern. Bei der Herstellung dieser Prepolymere (A) mit Polyurethankern wird vorzugsweise von den folgenden Edukten ausgegangen:
- Polyole (A1)
- Di- oder Polyisocyanate (A2)
- monomere Alkohole mit einer OH-Funktion (A3)
- Alkoxysilane (A4), die entweder über eine Isocyanatfunktion oder über eine isocyanatreaktive Gruppe verfügen.

Als Polyole (A1) für die Herstellung der Prepolymere (A) mit Polyurethankern können prinzipiell sämtliche polymeren, oligomeren oder auch monomeren Alkohole mit zwei oder mehr OH-Funktionen sowie deren Mischungen eingesetzt werden. Besonders geeignete Polyole (A1) sich aromatische und/oder aliphatische Polyesterpolyole und Polyetherpolyole, wie sie in der Literatur vielfach beschrieben sind. Die eingesetzten Polyether und/oder Polyester können dabei sowohl linear als auch verzweigt sein. Zudem können sie auch Substituenten wie z.B. Halogenatome besitzen. Auch hydroxyalkyl-funktionelle Phosphorsäureester/Polyphosphorsäureester können als Polyole (A1) eingesetzt werden. Ebenso ist der Einsatz beliebiger Mischungen der verschiedenen Polyoltypen möglich.

Beispiele für gebräuchliche Diisocyanate (A2) sind Diisocyanatodiphenylmethan (MDI), sowohl in Form von rohem oder technischem MDI als auch in Form reiner 4,4' bzw. 2,4' Isomeren oder deren Mischungen, Tolylendiisocyanat (TDI) in Form seiner verschiedene Regioisomere, Diisocyanatonaphthalin (NDI), Isophorondiisocyanat (IPDI) oder auch von Hexamethylendiisocyanat (HDI). Beispiele für Polyisocyanate (A2) sind polymeres MDI (P-MDI), Triphenylmethantriisocanat oder Biuret-triisocyanate. Die Di- und/oder Polyisocyanate (A2) können einzeln oder auch in Mischungen eingesetzt werden.

Die monomeren Alkohole mit einer Hydroxyfunktion (A3) dienen zum Einbau der Kettenenden entsprechend der allgemeinen Formel [2] in die Prepolymere (A). Hier können prinzipiell sämtliche Alkyl-, Cycloalkyl-, Alkenyl-, Aryl- oder Arylalkylmonoalkohole mit 2-50 Kohlenstoffatomen eingesetzt werden, wobei die Kohlenstoffketten der Alkohole beliebig durch nicht benachbarte Sauerstoffatome, Schwefelatome oder N-R²-Gruppen unterbrochen sein kann, und die Hauptkette von auch noch durch laterale Alkylgruppen mit 1-10 Kohlenstoffatomen oder Halogenatome substituiert sein kann. Bevorzugt werden jedoch Alkyl- oder Alkenyl-Alkohole mit 8-26 Kohlenstoffatomen, besonders bevorzugt Alkylalkohole mit 10-18 Kohlenstoffatomen eingesetzt. Die Kohlenstoffketten dieser Alkohole können dabei linear oder verzweigt sein, sind bevorzugt aber unverzweigt. Es können reine Alkohole oder auch Mischungen verschiedener Alkohole eingesetzt werden.

Als Alkoxysilane (A4) für die Herstellung der Prepolymere (A) mit Polyurethankern können prinzipiell sämtliche Alkoxysilane eingesetzt werden, die entweder über eine Isocyanatfunktion oder über eine isocyanatreaktive Gruppe verfügen. Die Alkoxysilane dienen zum Einbau der Alkoxysilylterminierungen in die Prepolymere (A). Als Alkoxysilane werden dabei vorzugsweise Verbindungen eingesetzt, die ausgewählt werden aus Silanen der allgemeinen Formeln [5] und [6] 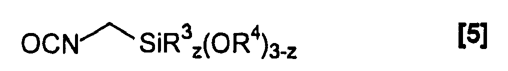 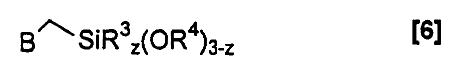 wobei
- **B**: eine OH-, SH- oder eine NHR³-Gruppe bedeutet und
- **R³, R⁴** und **z**: die bei der allgemeinen Formel [3] angegebenen Bedeutungen aufweisen.

Dabei können einzelne Silane (A4) sowie auch Mischungen verschiedener Silane (A4) eingesetzt werden.

Besonders bevorzugt ist der Einsatz von Silanen (A4) der allgemeinen Formel [7], 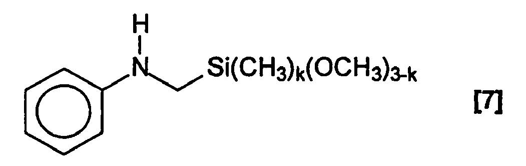 in der
**k** die Werte 0, 1 oder 2 bedeutet.

Dieses Silan läßt sich durch eine Reaktion aus Chlormethyltrimethoxysilan oder Chlormethyldimethoxymethylsilan mit Anilin, d.h. aus sehr einfachen und preiswerten Edukten problemlos in nur einem Reaktionsschritt herstellen. Beim Einsatz dieses Silans werden Prepolymere (A) mit Alkoxysilylterminierungen der allgemeinen Formel [4] erhalten.

Die Herstellung der Prepolymere (A) kann.durch ein einfaches - gegebenenfalls sukzessives - Zusammengeben der beschriebenen Komponenten erfolgen, wobei gegebenenfalls noch ein Katalysator zugegeben und/oder bei erhöhter Temperatur gearbeitet werden kann. Dabei reagieren die Isocyanatgruppen der Di- und/oder Polyisocyanate sowie - falls vorhanden - die Isocyanatgruppen des Silans der allgemeinen Formel [5] mit den OH- bzw. NH-Funktionen der zugegebenen Polyole und der monomeren Alkohole sowie - falls vorhanden.- mit den OH- bzw. NH-Funktionen der Silane der allgemeinen Formeln [6] und/oder [7].

Die Konzentrationen aller an sämtlichen Reaktionsschritten beteiligter Isocyanatgruppen und aller isocyanatreaktiver Gruppen sowie die Reaktionsbedingungen sind dabei so gewählt, daß im Laufe der Prepolymersynthese sämtliche Isocyanatgruppen abreagieren. Das fertige Prepolymer (A) ist somit isocyanatfrei. In einer bevorzugten Ausführungsform der Erfindung sind die Konzentrationsverhältnisse des weiteren sowie die Reaktionsbedingungen so gewählt, daß nahezu sämtliche Kettenenden (> 90 % der Kettenenden, besonders bevorzugt > 95 % der Kettenenden) der Prepolymere (A) entweder mit Alkoxysilylgruppen oder aber mit Resten der allgemeinen Formel [2] terminiert sind.

Die Herstellung der Prepolymere (A) mit Polyurethankern kann dabei auf verschiedenen Wegen erfolgen. Prinzipiell können alle Komponenten gemeinsam vorgelegt werden und die Reaktion anschließend durch die Zugabe eines Katalysators oder durch Erwärmen gestartet werden. Ob der relativ großen Exothermie diese Reaktionen ist es jedoch meist vorteilhaft, die einzelnen Komponenten sukzessive zuzugeben, um so die freiwerdende Wärmemenge besser kontrollieren zu können. Die Zugabereihenfolge und -geschwindigkeit der einzelnen Komponenten kann dabei beliebig gestaltet werden. Auch können die verschiedenen Rohstoffe sowohl einzeln als auch in Mischungen vorgelegt bzw. zugegeben werden. Prinzipiell ist auch eine kontinuierliche Prepolymerherstellung, z.B. in einem Röhrenreaktor, vorstellbar.

Bei einem besonders bevorzugten Herstellungsverfahren wird die Isocyanat-Komponente (A2) bestehend aus einem oder auch aus mehreren verschiedenen Di/Polyisocyanaten vorgelegt und mit einem Polyol (A1) bzw. einer Mischung aus mehreren Polyolen (A1) im Unterschuß versetzt. Diese beiden Komponenten reagieren bei Temperaturen über 60-80 °C oder in Gegenwart eines Katalysators zu einem isocyanatterminierten Prepolymer. Dieses wird anschließend mit einem oder mehreren Aminosilanen der allgemeinen Formeln [6] und/oder [7] versetzt, wobei die Konzentrationen so gewählt sind, daß sämtliche Isocyanatgruppen abreagieren. Es resultiert ein silanterminiertes Prepolymer. Eine Reinigung oder sonstige Aufarbeitung ist nicht erforderlich.

In einem bevorzugten Verfahren zur Herstellung der erfindungsgemäßen schäumbaren Mischungen wird das Prepolymer (A) vollständig oder zumindest teilweise in einem Druckbehälter hergestellt. Dabei kann der Reaktionsmischung auch bereits das Treibmittel sowie sämtliche weiteren Additive zudosiert werden. Auf diese Art werden die - gegebenenfalls relativ hochviskosen - Prepolymere (A) in Gegenwart des Treibmittels erzeugt und es bildet sich direkt eine niederviskose Treibmittel-Prepolymer-Lösung bzw. -Mischung.

Die bei der Herstellung der Prepolymeren (A) auftretenden Reaktion zwischen Isocyanatgruppen und isocyanatreaktiven Gruppen können gegebenenfalls durch einen Katalysator beschleunigt werden. Bevorzugt werden dabei dieselben Katalysatoren eingesetzt, die unten auch als Härtungskatalysatoren (D) für den Montageschaum aufgeführt sind. Gegebenenfalls kann derselbe Katalysator bzw. dieselbe Kombination mehrerer Katalysatoren, welche die Prepolymerherstellung katalysiert, auch als Härtungskatalysator (D) für die Schaumhärtung eingesetzt werden. In diesem Fall ist der Härtungskatalysator (D) bereits in dem fertigen Prepolymer enthalten und braucht bei der Compoundierung der schäumbaren Mischung nicht mehr extra zugegeben werden.

Neben den Prepolymeren (A) und dem Treibmittel (B) können die erfindungsgemäßen Massen noch beliebige weitere (Pre-)Polymere enthalten. Diese können ebenfalls über reaktive Gruppen verfügen, über die sie bei der Schaumhärtung mit in das entstehende Netzwerk eingebaut werden. Sie können jedoch auch unreaktiv sein.

Neben den Prepolymeren (A) sowie dem Kohlenwaserstoff-Treibmittel (B) können die erfindungsgemäßen isocyanatfreien, schäumbaren Mischungen auch noch einen niedermolekularen Reaktivverdünner (C) enthalten. Dabei können, bezogen auf 100 Gewichtsteile Prepolymer (A), bis zu 100 Gewichtsteile, vorzugsweise 1 bis 40 Gewichtsteile eines niedermolekularen Reaktivverdünners (C) mit einer Viskosität von höchstens 5 Pas bei 20°C, der mindestens eine C₁- bis C₆-Alkoxysilylgruppe pro Molekül aufweist, in der Mischung enthalten sein.

Als Reaktivverdünner (C) sind prinzipiell alle niedermolekularen Verbindungen mit einer Viskosität von vorzugsweise höchstens 5, insbesondere höchstens 2 Pas bei 20°C geeignet, die über reaktive Alkoxysilylgruppen verfügen, über die sie während der Aushärtung des Schaumes mit in das entstehende dreidimensionale Netzwerk eingebaut werden können. Der Reaktivverdünner (C) dient vor allem zur Erniedrigung der Viskosität von gegebenenfalls relativ hochviskosen Prepolymermischungen. Er kann bereits während der Synthese der Prepolymere (A) zugegeben werden und so auch das Auftreten von gegebenenfalls hochviskosen und damit nur noch schwer zu handhabenden Zwischenprodukten verhindern. Vorzugsweise verfügt der Reaktivverdünner (C) über eine hinreichend hohe (Gewichts-) Dichte an vernetzbaren Alkoxysilylgruppen, so daß er während der Härtung in das entstehende Netzwerk eingebaut werden kann, ohne die.Netzwerkdichte zu erniedrigen.

Bevorzugte Reaktivverdünner (C) sind die preisgünstigen Alkyltrimethoxysilane, wie Methyltrimethoxysilan sowie Vinyl- oder Phenyltrimethoxysilan, und deren Teilhydrolysate. Ein weiterer bevorzugter Reaktivverdünner ist das Carbamatosilan der allgemeinen Formel [8]: 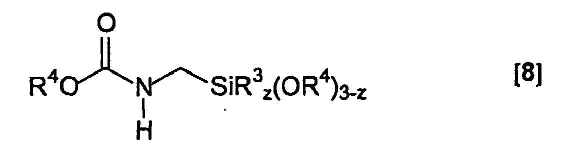 wobei **R³, R⁴** und z die bei Formel [3] angegebenen Bedeutungen aufweisen.

Zur Erzielung einer schnellen Aushärtung des Schaumes bei Raumtemperatur kann gegebenenfalls ein Härtungskatalysator (D) zugesetzt werden. Wie bereits erwähnt kommen hier u.a. die zu diesem Zwecke üblicherweise verwendeten organischen Zinnverbindungen, wie z.B. Dibutylzinndilaurat, Dioctylzinndilaurat, Dibutylzinndiacetylacetonat, Dibutylzinndiacetat oder Dibutylzinndioctoat etc., in Frage.

Des weiteren können auch Titanate, z.B. Titan(IV)isopropylat, Eisen(III)-Verbindungen, z.B. Eisen(III)-acetylacetonoat, oder auch Amine, z.B. Aminopropyltrimethoxysilan, N-(2-Aminoethyl)-aminopropyltrimethoxysilan, Triethylamin, Tributylamin, 1,4-Diazabicyclo[2,2,2]octan, 1,8-Diazabicyclo[5.4.0]undec-7-en, 1,5-Diazabicyclo[4.3.0]non-5-en, N,N-Bis-(N,N-dimethyl-2-aminoethyl)-methylamin, N,N-Dimethylcyclohexylamin, N,N-Dimethylphenlyamin, N-Ethylmorpholinin etc., eingesetzt werden. Auch Säuren wie Essigsäure, Benzoylchlorid, Phosphorsäure sowie ihre Mono- und Diester sowie anorganische Brönstedsäuren, wie z.B. Salzsäure, sind als Katalysatoren [D] geeignet. Daneben können hier aber auch zahlreiche weiter organische und anorganische Schwermetallverbindungen sowie organische und anorganische Lewissäuren oder -basen eingesetzt werden. Zudem kann die Vernetzungsgeschwindigkeit auch durch die Kombination verschiedener Katalysatoren bzw. von Katalysatoren mit verschiedenen Cokatalysatoren weiter gesteigert werden.

Die isocyanatfreien, schäumbaren Mischungen können des weiteren die üblichen Zusätze, wie beispielsweise Schaumstabilisatoren und Zellregulantien, Flammschutzmittel, Thixotropiermittel und/oder Weichmacher enthalten. Als Schaumstabilisatoren können vor allem die handelsüblichen durch Polyetherseitenketten modifizierten Siliconoligomeren eingesetzt werden. Als Flammschutzmittel eignen sich u.a. die bekannten phosphorhaltigen Verbindungen, vor allem Phosphate und Phosphonate, halogenierte und halogenfreie Phosphorsäureester sowie auch halogenierte Polyester und Polyole oder Chlorparaffine.

Die isocyanatfreien schäumbaren Mischungen können direkt als einkomponentige isocyanatfreie Sprayschäume eingesetzt werden.

Die Mischungen werden vorzugsweise in Druckbehältern, wie Druckdosen, aufbewahrt.

Alle vorstehenden Symbole der vorstehenden Formeln weisen ihre Bedeutungen jeweils unabhängig voneinander auf. In allen Formeln ist das Siliciumatom vierwertig.

Soweit nicht anders angegeben sind in den folgenden Beispielen alle Mengen- und Prozentangaben auf das Gewicht bezogen, alle Drücke 0,10 MPa (abs.) und alle Temperaturen 20°C.

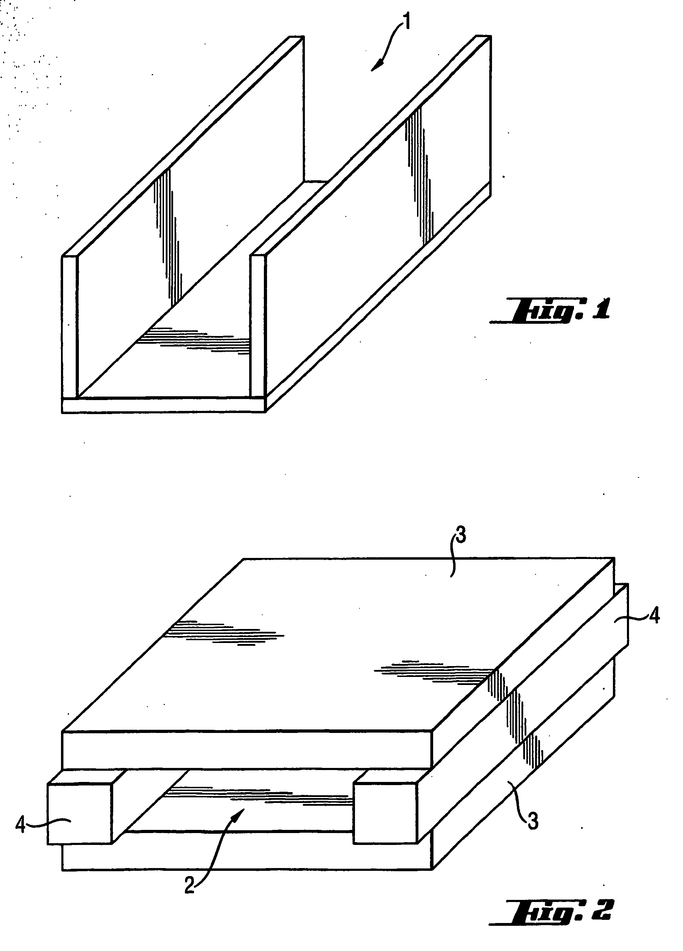

Zur Erläuterung eineiger Beispiele dienen Fig. 1 und 2.
In Fig. 1 ist Modellfuge 1 abgebildet, welche aus Holz oder Pappe angefertigt sein kann und eine Breite und Tiefe von jeweils 5 cm aufweist.
In Fig. 2 ist eine Modellfuge 2 abgebildet, welche aus 2 Holzplatten (3) der Dimensionen 1x15x15 cm und 2 Kunststoffbalken (4) der Dimensionen 2x2x17 cm besteht.

### Beispiel 1:

Herstellung von N-Phenylaminomethyl-methyldimethoxysilan: 2095 g (22,5 mol) Anilin werden in einem Laborreaktor komplett vorgelegt und anschließend mit Stickstoff inertisiert. Man heizt auf eine Temperatur von 115 °C auf und tropft 1159 g (7,5 mol) Chlormethyl-methyldimethoxysilan über 1.5 h zu und rührt für weitere 30 Minuten bei 125 - 130 °C nach. Nach einer Zugabe von ca. 150 g des Silans fällt vermehrt Anilinhydrochlorid als Salz aus, jedoch bleibt die Suspension bis zum Dosierende gut rührbar.

Das überschüssig eingesetzte Anilin wird bei gutem Vakuum (62 °C bei 7 mbar) entfernt. Anschließend gibt man bei Raumtemperatur 1400 ml n-Heptan zu und rührt die Suspension für 30 min bei 10 °C um Anilinhydrochlorid vollständig zu kristallisieren. Dieses wird anschließend abfiltriert. Das Lösungsmittel n-Heptan wird im Teilvakuum bei 60 - 70 °C entfernt. Der Rückstand wird destillativ gereinigt (89-91°C bei 0,16 mbar)

Es wird eine Ausbeute von 1210 g, d.h. 76,5% der Theorie, erreicht bei einer Produktreinheit von ca. 94,5 %. Das Produkt enthält etwa 3,5 % N,N-bis-[methyldimethoxysilyl-methyl]-phenylamin als Verunreinigung.

### Beispiel 2:

In einem 250 ml Reaktionsgefäß mit Rühr-, Kühl und Heizmöglichkeiten werden 52,0 g (298,5 mmol) Toluen-2,4-diisocyanat (TDI) vorgelegt und auf ca. 50 °C erwärmt. Dann wird eine Mischung aus 60 g (141,2 mmol) eines Polypropylenglycols mit einer mittleren Molmasse von 425 g/mol und 6 g (32,2 mmol) 1-Dodecanol zugegeben. Die Temperatur der Reaktionsmischung sollte dabei nicht auf über 80 °C ansteigen. Das Polypropylenglycol war zuvor durch 1-stündiges Erwärmen auf 100 C im Ölpumpenvakuum entwässert worden. Nach Beendigung der Zugabe wird für 15 min bei 80 °C gerührt.

Anschließend kühlt man auf etwa 50 °C ab und gibt 10 ml Vinyltrimethoxysilan als Reaktivverdünner hinzu. Danach tropft man 61,1 g, 294,1 mmol) N-Phenylaminomethyl-methyldimethoxysilan (hergestellt nach Beispiel 1) hinzu und rührt anschließend für 60 min bei 80 °C. In der resultierenden Prepolymermischung lassen sich IR-spektroskopisch keine Isocyanatgruppen mehr nachweisen. Man erhält eine klare, durchsichtige Prepolymermischung, die bei 50 °C eine Viskosität von 8,2 Pas aufweist. Sie läßt sich problemlos gießen und weiterverarbeiten.

### Beispiel 3:

50 g der Prepolymermischung aus Beispiel 2 werden in ein Druckglas mit Ventil gefüllt und mit 1,5 g Schaumstabilisator PC STAB EP 05 (Wacker Chemie GmbH, Germany) sowie einer Katalysatormischung aus 0,5 g Bis-(2-dimethylaminoethyl)-ether (Jeffcat^{®} ZF20 der Fa. Huntsman) und 0,5 g Aminopropyltrimethoxysilan (A1110 der Fa. Crompton) vermengt.

Anschließend wird diese Mischung mit einer Treibmittelmischung aus 8 ml eines Propan/Butangemisches (2:1) sowie 1,5 ml Dimethylether als Treibmittel beaufschlagt. Dabei wird eine klare und sehr dünnflüssige Lösung aus Treibmitteln, Additiven und Prepolymer erhalten.

Zu dieser Lösung werden weitere 10 ml Propan/Butan gegeben, die sich jedoch nicht mehr physikalisch lösen. Aus dieser Mischung läßt sich durch kurzes Schütteln - d.h. durch ca. 10-15 maliges lockeres Hin- und Herschütteln - völlig problemlos eine Emulsion erhalten, die für mindestens 1 h stabil bleibt. Bis zur vollständigen Entmischung der Emulsion dauert es bei Raumtemperatur 2-3 Tage. Auch nach dem Entmischen kann die Emulsion jederzeit durch erneutes kurzes Schütteln wieder hergestellt werden. Auch bei niedriger Temperatur (ca. 7 °C) ist die Herstellung einer Emulsion durch kurzes Schütteln (ca. 20-maliges Hin- und Herschütteln) noch problemlos möglich.

Beim Ausbringen der emulgierten Mischung wird ein standfester, weißer Schaum erhalten, der nach ca. 10 min klebfrei ist. Die Zeit bis zur vollständigen Härtung beträgt ungefähr 6 h. Der ausgehärtete Schaum zeichnet sich durch eine hohe Härte aus, ist nicht spröde und besitzt eine sehr gute Porenstruktur.

Die Schaumstruktur ist dabei unabhängig von der Geometrie der jeweiligen Fuge. Sowohl bei freier Verschäumung, d.h. bei Verschäumung auf einer Oberfläche, als auch bei Verschäumung in der Modellfuge 1 gemäß Fig. 1 oder Modellfuge 2 gemäß Fig. 2 werden rißfreie Schäume erhalten, unabhängig davon, ob die Fugen trocken sind, oder vor der Verschäumung angefeuchtet worden sind.

### Beispiel 4:

In einem 250 ml Reaktionsgefäß mit Rühr-, Kühl und Heizmöglichkeiten werden 60,4 g (346,8 mmol) Toluen-2,4-diisocyanat (TDI) vorgelegt und auf ca. 50 °C erwärmt. Dann wird eine Mischung aus 60 g (141,2 mmol) eines Polypropylenglycols mit einer mittleren Molmasse von 425 g/mol und 24 g (128,8 mmol) 1-Dodecanol zugegeben. Die Temperatur der Reaktionsmischung sollte dabei nicht auf über 80 °C ansteigen. Das Polypropylenglycol war zuvor durch 1-stündiges Erwärmen auf 100 C im Ölpumpenvakuum entwässert worden. Nach Beendigung der Zugabe wird für 15 min bei 80 °C gerührt.

Anschließend kühlt man auf etwa 50 °C ab und gibt 5 ml Vinyltrimethoxysilan als Reaktivverdünner hinzu. Danach tropft man 61,1 g, 294,1 mmol) *N*-Phenylaminomethyl-methyldimethoxysilan (hergestellt nach Bsp. 1) hinzu und rührt anschließend für 60 min bei 80 °C. In der resultierenden Prepolymermischung lassen sich IR-spektroskopisch keine Isocyanatgruppen mehr nachweisen. Man erhält eine klare, durchsichtige Prepolymermischung, die bei 50 °C eine Viskosität von 12,6 Pas aufweist. Sie läßt sich problemlos gießen und weiterverarbeiten.

### Beispiel 5:

50 g der Prepolymermischung aus Beispiel 4 werden in ein Druckglas mit Ventil gefüllt und mit 1,5 g Schaumstabilisator PC STAB EP 05 (Wacker Chemie GmbH, Germany) sowie einer Katalysatormischung aus 0,5 g Bis-(2-dimethylaminoethyl)-ether (Jeffcat^{®} ZF20 der Fa. Huntsman) und 0,5 g Aminopropyltrimethoxysilan (A1110 der Fa. Crompton) vermengt.

Anschließend wird diese Mischung mit einer Treibmittelmischung aus 10 ml eines Propan/Butangemisches (2:1) sowie 1,0 ml Dimethylether als Treibmittel beaufschlagt. Dabei wird eine klare und sehr dünnflüssige Lösung aus Treibmitteln, Additiven und Prepolymer erhalten.

Zu dieser Lösung werden weitere 8 ml Propan/Butan gegeben, die sich jedoch nicht mehr physikalisch lösen. Aus dieser Mischung läßt sich durch kurzes Schütteln - d.h. durch ca. 10-15 maliges lockeres Hin- und Herschütteln - völlig problemlos eine Emulsion erhalten, die für mindestens 1 h stabil bleibt. Bis zur vollständigen Entmischung der Emulsion dauert es bei Raumtemperatur 2-3 Tage. Auch nach dem Entmischen kann die Emulsion jederzeit durch erneutes kurzes Schütteln wieder hergestellt werden. Auch bei niedriger Temperatur (ca. 7 °C) ist die Herstellung einer Emulsion durch kurzes Schütteln (ca. 20-maliges Hin- und Herschütteln) noch problemlos möglich.

Beim Ausbringen der emulgierten Mischung wird ein standfester, weißer Schaum erhalten, der nach ca. 10 min klebfrei wird. Die Zeit bis zur vollständigen Härtung beträgt ungefähr 6 h: Der ausgehärtete Schaum zeichnet sich durch eine moderate Härte, eine sehr gute Elastizität aus und besitzt eine sehr gute Porenstruktur.

Die Schaumstruktur ist dabei unabhängig von der Geometrie der jeweiligen Fuge. Sowohl bei freier Verschäumung, d.h. bei Verschäumung auf einer Oberfläche, als auch bei Verschäumung in Modellfuge 1 gemäß Fig. 1 oder Modellfuge 2 gemäß Fig. 2 werden rißfreie Schäume erhalten, unabhängig davon, ob die Fugen trocken sind, oder vor der Verschäumung angefeuchtet worden sind.

### Beispiel 6:

In einem 250 ml Reaktionsgefäß mit Rühr-, Kühl und Heizmöglichkeiten werden 55,5 g (311,4 mmol) Toluen-2,4-diisocyanat (TDI) vorgelegt und auf ca. 50 °C erwärmt. Dann wird eine Mischung aus 60 g (141,2 mmol) eines Polypropylenglycols mit einer mittleren Molmasse von 425 g/mol und 10 g (41,3 mmol) 1-Cetylalkohol (linearer Alkohol mit 16 C-Atomen) zugegeben. Die Temperatur der Reaktionsmischung sollte dabei nicht auf über 80 °C ansteigen. Das Polypropylenglycol war zuvor durch 1-stündiges Erwärmen auf 100 C im Ölpumpenvakuum entwässert worden. Nach Beendigung der Zugabe wird für 15 min bei 80 °C gerührt.

Anschließend kühlt man auf etwa 50 °C ab und gibt 10 ml Vinyltrimethoxysilan als Reaktivverdünner hinzu. Danach tropft man 61,1 g, 294,1 mmol) *N*-Phenylaminomethyl-methyldimethoxysilan (hergestellt nach Beispiel 1) hinzu und rührt anschließend für 60 min bei 80 °C. In der resultierenden Prepolymermischung lassen sich IR-spektroskopisch keine Isocyanatgruppen mehr nachweisen. Man erhält eine klare, durchsichtige Prepolymermischung, die bei 50 °C eine Viskosität von 10,6 Pas aufweist. Sie läßt sich problemlos gießen und weiterverarbeiten.

### Beispiel 7:

50 g der Prepolymermischung aus Beispiel 6 werden ebenso verschäumt, wie in Beispiel 5 beschrieben. Der Schaum hat sowohl bei freier Verschäumung als auch bei Verschäumung in Modellfuge 1 gemäß Fig. 1 oder Modellfuge 2 gemäß Fig. 2 dieselben positiven Eigenschaften wie der in Beispiel 6 beschriebene Schaum.

### Beispiel 8:

Es wird so vorgegangen wie in Beispiel 2. Jedoch wird der schäumbaren Mischung anstelle des Vinyltrimethoxysilans als Reaktivverdünner Methylcarbamatomethyl-trimethxysilan zugesetzt (ebenfalls 10 ml auf eine Rezeptur entsprechend des Beispiels 3).

Bei den Schäumversuchen entsprechend des Beispiels 3 wird ein Schaum erhalten, der sich durch eine etwas kürzere Hautbildungszeit von ca. 8 min auszeichnet. Schaumhärte und Schaumstruktur sind wiederum hervorragend. Auch hier ist die Schaumstruktur unabhängig von der Geometrie der jeweiligen Fuge. Sowohl bei freier Verschäumung als auch bei Verschäumung in Modellfuge 1 gemäß Fig. 1 oder Modellfuge 2 gemäß Fig. 2 werden rißfreie Schäume erhalten.

### Vergleichsbeispiel 1:

In einem 250 ml Reaktionsgefäß mit Rühr-, Kühl und Heizmöglichkeiten werden 24,6 g (141,2 mmol) Toluen-2,4-diisocyanat (TDI)vorgelegt und auf ca. 50 °C erwärmt. Dann werden 30 g (70,6 mmol) eines Polypropylenglycols mit einer mittleren Molmasse von 425 g/mol zugegeben. Die Temperatur der Reaktionsmischung sollte dabei nicht auf über 80 °C ansteigen. Das Polypropylenglycol war zuvor durch 1-stündiges Erwärmen auf 100 C im Ölpumpenvakuum entwässert worden. Nach Beendigung der Zugabe wird für 15 min bei 80 °C gerührt

Man kühlt auf etwa 50 °C ab und gibt 5 ml Vinyltrimethoxysilan als Reaktivverdünner hinzu. Danach tropft man 29,8 g (141,2 mmol) N-Phenylaminomethyl-methyldimethoxysilan hinzu und rührt anschließend für 60 min bei 80 °C. In der resultierenden Prepolymermischung lassen sich IR-spektroskopisch keine Isocyanatgruppen mehr nachweisen. Man erhält eine klare, durchsichtige Prepolymermischung, die sich bei 50 °C mit einer Viskosität von 18,5 Pas problemlos gießen und weiterverarbeiten läßt.

### Vergleichsbeispiel 2:

Die Prepolymermischung entsprechen dem Vergleichsbeispiel 1 ist völlig unverträglich mit Propan/Butan-Mischungen als Treibmittel. Versucht man, entsprechend der Vorgehensweise von Beispiel 3 eine schäumbare Mischung herzustellen, so erhält man lediglich ein 2-Phasen-Gemisch aus einer Treibmittelphase und einer - bei Raumtemperatur - extrem hochviskosen Prepolymerphase. Diese beiden Phasen lassen sich nur bei einer erhöhter Temperatur von ca. 40 °C durch langes und extrem starkes Schütteln emulgieren (Schütteldauer: > 30 min). Bei Raumtemperatur ist eine Emulgierung durch Schütteln nicht mehr möglich.

Bei Standzeiten > 7 Tage tritt eine vollständige Entmischung der Emulsion auf. Die Reemulgierung des Zweiphasengemisches ist danach ebenso schwierig wie oben beschriebene erste Emulgierung.

Zudem gestaltet sich die Verschäumung der Mischung selbst nach der Emulgierung meist äußerst problematisch, da trotz des - oben beschrieben und extrem aufwendigen - Emulgierverfahrens einzelne zähe Polymerbrocken in der Prepolymer-Treibmittel-Mischung verbleiben, die beim Verschäumen leicht das Ventil verstopfen können. Gut verschäumbare, gleichmäßige Schäume wurden daher nur in Ausnahmefällen erhalten.

### Vergleichsbeispiel 3:

50 g der Prepolymermischung aus Vergleichsbeispiel 1 werden mit 1,2 g Schaumstabilisator PC STAB EP 05 (Wacker Chemie GmbH, Germany) sowie einer Katalysatormischung aus 0,5 g Bis-(2-dimethylaminoethyl)-ether (Jeffcat^{®} ZF20 der Fa. Huntsman) und 0,5 g Aminopropyl-trimethoxysilan (A1110 der Fa. Crompton) vermengt. Anschließend wird diese Mischung in ein Druckglas mit Ventil gefüllt und mit 12 ml 1,1,1,2-Tetrafluorethan (R 134) als Treibmittel beaufschlagt.

Beim Ausbringen dieser Mischung wird ein standfester, weißer Schaum erhalten, der nach ca. 8 min klebfrei wird. Die Zeit bis zur vollständigen Härtung beträgt ungefähr 6 h. Der ausgehärtete Schaum zeichnet sich durch eine hohe Härte aus. Bei freier Verschäumung besitzt der Schaum eine gute Schaumstruktur.

In der Modellfuge 1 gemäß Fig. 1 wird ebenfalls oftmals ein rißfreier Schaum mit moderater Schaumstruktur erhalten. Das System ist jedoch nicht robust, so daß gelegentlich kleinere bis mittlere Risse im Schaum auftreten können. Die Risse können dabei bis zu 20 % des Fugenvolumens ausmachen. Noch kritischer ist die Modellfuge 2 gemäß Fig. 2. Wird der Schaum in dieser Fuge verschäumt, so wird ein völlig zerrissener Schaum erhalten. Dabei nehmen die Risse ausnahmslos weit über 50 % des Fugenvolumens ein.

### Vergleichsbeispiel 4:

Es wird so vorgegangen wie in dem Vergleichsbeispiel 1. Jedoch wird der schäumbaren Mischung anstelle des Vinyltrimethoxysilans als Reaktivverdünner Methylcarbamatomsthyl-trimethxysilan zugesetzt (ebenfalls 5 g auf eine Rezeptur entsprechend des Vergleichsbeispiels 1).

Bei den Schäumversuchen entsprechend der Vergleichsbeispiele 2 und 3 werden mit den jeweiligen Treibmitteln exakt dieselben negativen Ergebnisse erzielt.

## Patentansprüche

1. Isocyanatfreie schäumbare Mischungen enthaltend
(A) eine Mischung aus Prepolymeren (A), deren Kettenenden zu 50-99 % mit Alkoxysilylgruppen und zu 1-50 % mit Gruppen der allgemeinen Formel [2]
A¹-R¹ [2]
terminiert sind, in der
**A¹** ein Sauerstoffatom, eine N-R²-Gruppe oder ein Schwefelatom,
**R¹** einen Alkyl-, Cycloalkyl-, Alkenyl-, Aryl- oder Arylalkylrest mit 2-50 Kohlenstoffatomen, wobei die Kohlenstoffkette beliebig durch nicht benachbarte Sauerstoffatome, Schwefelatome oder N-R²-Gruppen unterbrochen sein kann, und die Hauptkette von **R¹** auch noch durch laterale Alkylgruppen mit 1-10 Kohlenstoffatomen oder Halogenatome substituiert sein kann, und
**R²** ein Wasserstoffatom, einen Alkyl-, Alkenyl- oder Arylrest mit 1-10 Kohlenstoffatomen bedeuten,
sowie
(B) ein Kohlenwasserstoff-Treibmittel.

2. Mischungen nach Anspruch 1, bei denen **R¹** eine Alkyl- oder Alkenylgruppe mit 8-26 Kohlenstoffatomen bedeutet.

3. Mischungen nach Anspruch 1 oder 2, bei denen die Prepolymere (A) über Alkoxysilylgruppen der allgemeinen Formel [3] 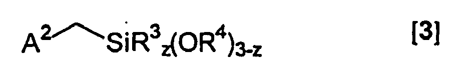 verfügen, in der
**A²** ein Sauerstoffatom, eine N-R⁵-Gruppe oder ein Schwefelatom,
**R³** einen Alkyl-, Cycloalkyl-, Alkenyl- oder Arylrest mit 1-10 Kohlenstoffatomen,
**R⁴** einen Alkylrest mit 1-2 Kohlenstoffatomen oder einen ω-Oxaalkyl-alkylrest mit insgesamt 2-10 Kohlenstoffatomen,
**R⁵** ein Wasserstoffatom, einen Alkyl-, Alkenyl- oder Arylrest mit 1-10 Kohlenstoffatomen oder eine -CH₂-SiR³_{z}(OR⁴)_{3-z}-Gruppe und,
**z** die Werte 0, 1 oder 2 bedeuten.

4. Mischungen nach Anspruch 3, bei denen das Heteroatom **A²** in der allgemeinen Formel [3] Teil einer Harnstoff- oder Urethaneinheit ist.

5. Mischungen nach Anspruch 1 bis 4, bei denen das Kohlenwasserstoff-Treibmittel (B) Kohlenwasserstoffe mit 1-5 Kohlenstoffatomen enthält.

6. Mischungen nach Anspruch 1 bis 5, die eine Treibmittel-Mischung (BM) enthalten, welche mindestens 50 Vol.-% Kohlenwasserstoff-Treibmittel (B) und ein oder mehrere weitere Treibmittel enthält.

7. Mischungen nach Anspruch 6, bei den ein weiteres Treibmittel Dimethylether ist.

8. Verfahren zur Herstellung der schäumbaren Mischungen gemäß Anspruch 1 bis 7, bei dem das Prepolymer (A) vollständig oder zumindest teilweise in einem Druckbehälter hergestellt wird.

9. Druckbehälter, enthaltend die schäumbaren Mischungen gemäß Anspruch 1 bis 7.

## Claims

1. Isocyanate-free foamable mixture comprising
(A) a mixture of prepolymers (A) in which 50-99% of the chain ends are terminated by alkoxysilyl groups and 1-50% of the chain ends are terminated by groups of the general formula [2]
A¹-R¹ [2]
where
A¹ is an oxygen atom, an N-R² group or a sulfur atom,
R¹ is an alkyl, cycloalkyl, alkenyl, aryl or arylalkyl radical having 2-50 carbon atoms in which the carbon chain can be interrupted as desired by nonadjacent oxygen atoms, sulfur atoms or N-R² groups and the main chain of R¹ can also be substituted by lateral alkyl groups having 1-10 carbon atoms or halogen atoms, and
R² is a hydrogen atom or an alkyl, alkenyl or aryl radical having 1-10 carbon atoms,
and
(B) a hydrocarbon blowing agent.

2. Mixtures according to Claim 1, wherein R¹ is an alkyl or alkenyl group having 8-26 carbon atoms.

3. Mixtures according to Claim 1 or 2, wherein the prepolymers (A) have alkoxysilyl groups of the general formula [3] 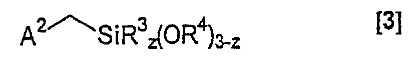 where
A² is an oxygen atom, an N-R⁵ group or a sulfur atom,
R³ is an alkyl, cycloalkyl, alkenyl or aryl radical having 1-10 carbon atoms,
R⁴ is an alkyl radical having 1-2 carbon atoms or an ω-oxaalkylalkyl radical having a total of 2-10 carbon atoms,
R⁵ is a hydrogen atom, an alkyl, alkenyl or aryl radical having 1-10 carbon atoms or a -CH₂-SiR³_{z}(OR⁴)_{3-z} group and,
z is 0, 1 or 2.

4. Mixtures according to Claim 3, wherein the heteroatom A² in the general formula [3] is part of a urea or urethane unit.

5. Mixtures according to any of Claims 1 to 4, wherein the hydrocarbon blowing agent (B) comprises hydrocarbons having 1-5 carbon atoms.

6. Mixtures according to any of Claims 1 to 5 comprising a blowing agent mixture (BM) which comprises at least 50% by volume of hydrocarbon blowing agent (B) and one or more further blowing agents.

7. Mixtures according to Claim 6, wherein a further blowing agent is dimethyl ether.

8. Process for preparing the foamable mixtures according to any of Claims 1 to 7, wherein the prepolymer (A) is prepared entirely or at least partly in a pressure vessel.

9. Pressure vessel containing the foamable mixtures according to any of Claims 1 to 7.

## Revendications

1. Mélanges exempts d'isocyanate, pouvant être moussés, contenant
(A) un mélange de prépolymères (A), dont les extrémités de chaîne sont terminées, à raison de 50-99% par des groupes alcoxysilyle et à raison de 1-50% par des groupes de formule générale [2]
A¹-R¹ [2]
dans laquelle
A¹ signifie un atome d'oxygène, un groupement N-R² ou un atome de soufre,
R¹ signifie un radical alkyle, cycloalkyle, alcényle, aryle ou arylalkyle comprenant 2-50 atomes de carbone, la chaîne carbonée pouvant être interrompue de manière quelconque, par des atomes, non adjacents, d'oxygène, de soufre ou des groupes N-R², et la chaîne principale de R¹ pouvant également encore être substituée par des groupements alkyle latéraux comprenant 1-10 atomes de carbone ou atomes d'halogène et
R² signifie un atome d'hydrogène, un radical alkyle, alcényle ou aryle comprenant 1-10 atomes de carbone,
ainsi que
(B) un agent gonflant hydrocarboné.

2. Mélanges selon la revendication 1, où R¹ signifie un groupement alkyle ou alcényle comprenant 8-26 atomes de carbone.

3. Mélanges selon la revendication 1 ou 2, où les prépolymères (A) disposent de groupements alcoxysilyle de formule générale [3] 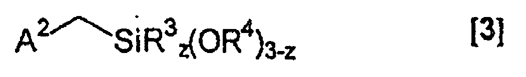 dans laquelle
A² signifie un atome d'oxygène, un groupement N-R⁵ ou un atome de soufre,
R³ signifie un radical alkyle, cycloalkyle, alcényle ou aryle comprenant 1-10 atomes de carbone,
R⁴ signifie un radical alkyle comprenant 1-2 atomes de carbone ou un radical ω-oxaalkylalkyle comprenant au total 2-10 atomes de carbone,
R⁵ signifie un atome d'hydrogène, un radical alkyle, alcényle ou aryle comprenant 1-10 atomes de carbone ou un groupement -CH₂-SiR³_{z}(OR⁴)_{3-z} et
z signifie les valeurs 0, 1 ou 2.

4. Mélanges selon la revendication 3, où l'hétéroatome A² dans la formule générale [3] fait partie d'une unité urée ou uréthane.

5. Mélanges selon les revendications 1 à 4, où l'agent gonflant hydrocarboné (B) contient des hydrocarbures comprenant 1-5 atomes de carbone.

6. Mélanges selon les revendications 1 à 5, qui contiennent un mélange d'agents gonflants (BM) qui contient au moins 50% en volume d'agent gonflant hydrocarboné (B) et un ou plusieurs autres agents gonflants.

7. Mélanges selon la revendication 6, où un autre agent gonflant est le diméthyléther.

8. Procédé pour la préparation des mélanges pouvant être moussés selon les revendications 1 à 7, où le prépolymère (A) est préparé totalement ou du moins partiellement dans un récipient sous pression.

9. Récipient sous pression, contenant les mélanges pouvant être moussés selon les revendications 1 à 7.
